# EUROPEAN PATENT APPLICATION

(11) **EP 3 751 122 A1**
(43) Date of publication of application: **16.12.2020**
(21) Application number: 19754860.5
(22) Date of filing: 31.01.2019
(51) Int. Cl.: F02D 45/00, F02B 33/00, F02B 33/34, F02B 39/10, F02D 9/02, F02D 23/00, F02D 41/06, F02D 43/00, F02N 11/08, F02N 19/00, F02P 19/02

(54) **ENGINE START CONTROL DEVICE**

(30) Priority: 16.02.2018 JP 2018025886
(71) Applicant: MAZDA MOTOR CORPORATION, Hiroshima 730-8670 (JP)
(72) Inventor: MORIZANE, Kenichi, Aki-gun, Hiroshima 730-8670 (JP)
(74) Representative: Müller-Boré & Partner Patentanwälte PartG mbB
(86) International application number: PCT/JP2019/003313
(87) International publication number: WO 2019/159699

(57) **Abstract**

Provided are a motor (20) capable of forcibly rotating an engine when the engine is started; and an electric supercharger (51) disposed in an intake passage (30) and driven by electric energy. When the engine is started in a state that a temperature inside a cylinder (2) is equal to or higher than a predetermined first reference temperature, the electric supercharger (51) is driven after an assist motor (20) is driven. When the engine is started in a state that a temperature inside the cylinder (2) is lower than the first reference temperature, the assist motor (20) is driven after the electric supercharger (51) is driven.

## Description

### TECHNICAL FIELD

The present invention relates to a device for controlling an engine provided with a cylinder that performs combustion, a piston that reciprocates within the cylinder, and an intake passage through which intake air to be introduced to the cylinder flows.

### BACKGROUND ART

When an engine is started in a state that an engine temperature or an outside air temperature is low, namely, in a so-called cold state starting, ignitability of an air-fuel mixture inside a cylinder may be lowered by lowering of a compression end temperature due to the low engine temperature or outside air temperature, and engine startability may be deteriorated.

As a countermeasure, for example, Patent Literature 1 discloses a configuration in which an electric supercharger is disposed in an intake passage for introducing intake air to a cylinder, and the electric supercharger is driven in order to enhance engine startability.

### CITATION LIST

### PATENT LITERATURE

Patent Literature 1: Japanese Unexamined Patent Application Publication No. 2008-106636

### SUMMARY OF INVENTION

In an engine, a motor for forcibly rotating the engine when the engine is started is provided. Therefore, when an electric supercharger is disposed in addition to the motor, it is necessary to drive the electric supercharger in addition to the motor. This may excessively increase electric current to be output from an electric power source, and electric power accumulated in the electric power source may be considerably lowered.

An object of the present invention is to provide an engine start control device capable of enhancing engine startability, while suppressing lowering of electric power of an electric power source.

An engine start control device according to one aspect of the present invention is a device for controlling an engine provided with a cylinder that performs combustion, a piston that reciprocates within the cylinder, and an intake passage through which intake air to be introduced to the cylinder flows. The device includes: an electric supercharger disposed in the intake passage and driven by electric energy; a motor capable of forcibly rotating the engine when the engine is started; and a control unit that controls the electric supercharger and the motor. The control unit drives the electric supercharger after driving the motor, when the engine is started in a state that a temperature inside the cylinder is equal to or higher than a first reference temperature. The control unit drives the motor after driving the electric supercharger, when the engine is started in a state that a temperature inside the cylinder is lower than the first reference temperature.

### BRIEF DESCRIPTION OF DRAWINGS

FIG. 1 is a system diagram illustrating a preferred embodiment of an engine to which a start control device according to the present invention is applied.
FIG. 2 is a block diagram illustrating a control system of the engine.
FIG. 3 is a table illustrating a control content in each of control modes at a key start time.
FIG. 4 is a graph illustrating a timewise change of each parameter, when the engine is started in an ordinary mode.
FIG. 5 is a graph illustrating a timewise change of each parameter, when the engine is started in a supercharging mode.
FIG. 6 is a graph illustrating a timewise change of each parameter, when the engine is started in an intake throttling plus supercharging mode.
FIG. 7 is a graph illustrating a timewise change of each parameter, when the engine is started in a circulating mode.
FIG. 8 is a diagram for describing an intake air circulating flow.
FIG. 9 is a graph illustrating a timewise change of each parameter, when the engine is started in a glow energization mode.
FIG. 10 is a graph illustrating a timewise change of each parameter, when the engine is started in an emergency mode.
FIG. 11 is a diagram for describing an intake air flow in the emergency mode.

### DESCRIPTION OF EMBODIMENTS

In the following, an embodiment according to the present invention is described with reference to the accompanying drawings. The following embodiment is one example embodying the present invention, and does not limit a technical scope of the present invention.

### (1) Overall Configuration of Engine

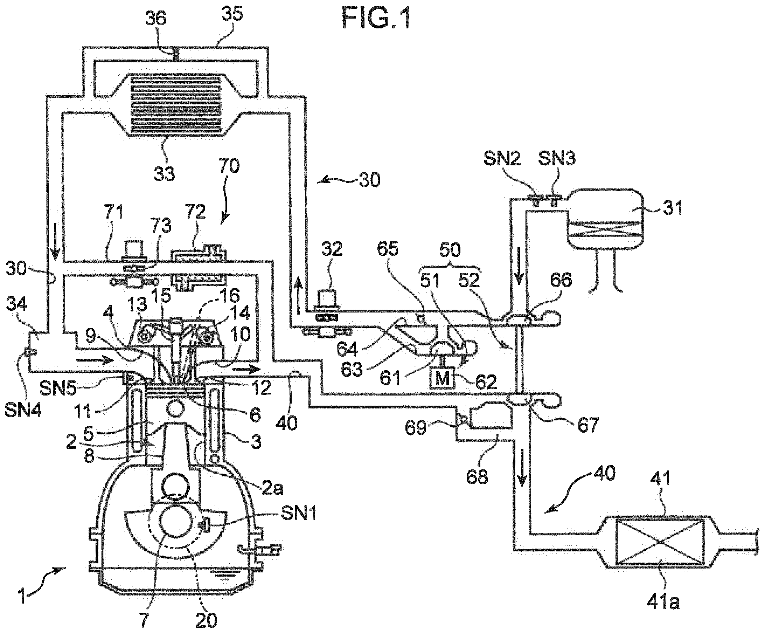

FIG. 1 is a system diagram illustrating a preferred embodiment of an engine to which a start control device according to the present invention is applied. The engine illustrated in FIG. 1 is a 4-cycle diesel engine mounted in a vehicle, as a power source for traveling. The engine includes an engine body 1, an intake passage 30 through which intake air to be introduced to the engine body 1 flows, an exhaust passage 40 through which exhaust gas discharged from the engine body 1 flows, a supercharging device 50 that feeds intake air to the engine body 1, while compressing the intake air flowing through the intake passage 30, and an EGR device 70 that returns a part of exhaust gas flowing through the exhaust passage 40 to the intake passage 30.

The engine body 1 is of an in-line multi-cylinder type having a plurality of cylinders 2 aligned in a row (FIG. 1 illustrates only one of the cylinders). The engine body 1 includes a cylinder block 3 in which the plurality of cylinders 2 are formed, a cylinder head 4 mounted on an upper surface of the cylinder block 3 in such a way as to close the cylinders 2 from above, and a plurality of pistons 5 respectively and reciprocally received in the cylinders 2. In the present embodiment, the engine body 1 is an in-line 4-cylinder engine having four cylinders 2. Since a structure of each cylinder 2 is the same, in the following, description is basically made on the basis of one cylinder 2.

A combustion chamber 6 is defined above the piston 5. Fuel containing light oil as a main component is supplied to the combustion chamber 6 by injection from a fuel injection valve 15 to be described later. The supplied fuel is combusted (diffused and combusted) by compression ignition. The piston 5 is pushed down by an expansion force by combustion, and reciprocates up and down.

A crankshaft 7 being an output shaft of the engine body 1 is disposed below the piston 5. The crankshaft 7 is connected to the piston 5 via a connecting rod 8, and rotates about an axis of the crankshaft 7, as the piston 5 reciprocates (as the piston 5 moves up and down).

A geometric compression ratio of the cylinder 2, in other words, a ratio between a volume of the combustion chamber 6 when the piston 5 is at a top dead center, and a volume of the combustion chamber 6 when the piston 5 is at a bottom dead center is set to be not smaller than 14 but not larger than 30.

A crank angle sensor SN1 for detecting an angle (crank angle) of the crankshaft 7, and a rotating speed (engine speed) of the crankshaft 7 is provided in the cylinder block 3. Further, a water temperature sensor SN5 for detecting a temperature of engine cooling water flowing through the engine body 1 (the cylinder block 3 and the cylinder head 4) is provided in the cylinder head 4. In the following, a temperature of engine cooling water is referred to as an engine water temperature, as necessary.

An electrically operated motor generator 20 is connected to the crankshaft 7. When the engine is started, the motor generator 20 is engaged with the crankshaft 7, and forcibly rotates the crankshaft 7 (causes cranking). In the present embodiment, an engine is mounted in a hybrid vehicle provided with a motor, in addition to the engine body 1, as a drive source of a vehicle. Accordingly, a motor generator (so-called integrated starter-generator) having a function of giving a driving force to the engine body 1, and a function as a generator that generates electricity by receiving output of the engine body 1 in combination is connected to the engine body 1. Specifically, the motor generator 20, as a motor, forcibly rotates the engine when the engine is started (functions as a so-called starter motor), and gives a driving force to the engine when the engine is accelerated. Further, the motor generator 20, as a generator, generates electricity by receiving output from the engine body 1. In the present embodiment, the motor generator 20 is linked to an output shaft of the engine body 1. The motor generator 20 is configured to enable to increase the engine rotation number up to about 800 rpm in a short time only by output of the motor generator 20. In the following, the motor generator 20 is described mainly for a case that the motor generator 20 is functioned as a motor, when the engine is started. The motor generator 20 is simply referred to as the assist motor 20.

An intake port 9 and an exhaust port 10 opened in the combustion chamber 6, an intake valve 11 for opening and closing the intake port 9, an exhaust valve 12 for opening and closing the exhaust port 10, and valve gear mechanisms 13 and 14 for driving to open and close the intake valve 11 and the exhaust valve 12 in association with rotation of the crankshaft 7 are provided in the cylinder head 4.

The fuel injection valve 15 for injecting fuel (diesel oil) to the combustion chamber 6 is provided in the cylinder head 4. The fuel injection valve 15 is, for example, a multi-hole injection valve for radially injecting fuel from a center of a ceiling surface of the combustion chamber 6. Although illustration is omitted, a recess portion (cavity) for receiving fuel injected from the fuel injection valve 15 is formed in a crown surface of the piston 5.

A glow plug 16 having a distal end that generates heat by energization is provided in the cylinder head 4. The glow plug 16 is mounted on the cylinder head 4 in such a way that the distal end thereof faces inside the combustion chamber 6 (inside the cylinder 2). In other words, the glow plug 16 whose distal end is disposed inside the combustion chamber 6 (cylinder 2) is mounted on the cylinder head 4.

The intake passage 30 is connected to one side surface of the cylinder head 4 in such a way as to communicate with the intake port 9. An air cleaner 31 for removing foreign matter within intake air, an intake throttle valve 32 for adjusting a flow rate of intake air by opening and closing the intake passage 30, an intercooler 33 for cooling intake air compressed by the supercharging device 50, and a surge tank 34 are provided in this order in the intake passage 30 from an upstream side of the intake passage 30.

An opening angle of the intake throttle valve 32 is controlled to any value in a range from a fully closed state to a fully opened state. A fully closed state of the intake throttle valve 32 is not limited to a state that the intake passage 30 is completely closed by the intake throttle valve 32, and also includes a state that the intake passage 30 is slightly opened. For example, when an opening angle of the intake throttle valve 32 is set not to be closed beyond a predetermined opening angle in order to avoid clogging of the intake throttle valve 32 by adhesion of ice or the like, a state that the opening angle of the intake throttle valve 32 is equal to the predetermined opening angle is also included in the fully closed state.

A compressor 61 is disposed in a main passage 63, which is formed in the intake passage 30 at a position between the air cleaner 31 and the intake throttle valve 32.

An I/C bypass passage (intercooler bypass passage) 35 for bypassing the intercooler 33 is formed in the intake passage 30 in parallel to a passage in which the intercooler 33 is disposed. Specifically, the I/C bypass passage 35 connects a portion of the intake passage 30 between the intake throttle valve 32 and the intercooler 33, and a portion of the intake passage 30 between a downstream end of an EGR passage 71 to be described later and the intercooler 33. An openable and closable I/C bypass valve (intercooler bypass valve, or I/C bypass valve) 36 is provided in the I/C bypass passage 35. When the I/C bypass valve 36 is fully opened, almost all intake air (air) within the intake passage 30 passes through the I/C bypass passage 35 whose flow channel resistance is smaller, without passing through the intercooler 33.

An airflow sensor SN3 for detecting an intake air amount being a flow rate of air (fresh air) to be introduced to the engine body 1 through the intake passage 30, and an outside air temperature sensor SN2 for detecting an outside air temperature being a temperature of air flowing into the intake passage 30, in other words, external air are provided in a downstream portion of the intake passage 30 with respect to the air cleaner 31. An intake air pressure sensor SN4 for detecting a pressure of intake air inside the surge tank 34 is provided in the surge tank 34.

The exhaust passage 40 is connected to the other side surface of the cylinder head 4 in such a way as to communicate with the exhaust port 10. A catalytic converter 41 incorporated with a catalyst 41a for purifying various harmful components contained in exhaust gas is provided in the exhaust passage 40. For example, one or both of an oxidation catalyst for oxidizing CO and HC in exhaust gas into harmless components, and an NOx catalyst for reducing NOx in exhaust gas into harmless components is used as the catalyst 41a. Although illustration is omitted, a diesel particulate filter (DPF) for trapping soot within exhaust gas is provided in the exhaust passage 40.

The supercharging device 50 is a so-called two-stage supercharging device, and includes two superchargers 51 and 52 disposed in series. The supercharger 51 (electric supercharger) is an electric supercharger to be driven by electric energy. The supercharger 52 is a turbo supercharger to be driven by energy of exhaust gas. In the following, the supercharger 51 is referred to as the electric supercharger 51, and the supercharger 52 is referred to as the turbo supercharger 52.

The electric supercharger 51 includes a motor 62 that is actuated by receiving electric power supply, and the compressor 61 that compresses intake air by being driven and rotated by the motor 62. The compressor 61 is disposed in the main passage 63 of the intake passage 30. A bypass passage 64 for bypassing the compressor 61 is formed in the intake passage 30 in parallel to the main passage 63. A bypass valve 65 capable of opening and closing the bypass passage 64 is provided in the bypass passage 64. Specifically, the bypass passage 64 connects a portion of the main passage 63 upstream with respect to the compressor 61 of the electric supercharger 51 and downstream with respect to a compressor 66 of the turbo supercharger 52 to be described later; and a portion of the main passage 63 downstream with respect to the compressor 61 of the electric supercharger 51 and upstream with respect to the intake throttle valve 32.

In this way, in the present embodiment, in addition to the assist motor 20, the motor 62 of the electric supercharger 51 is provided as a motor that is actuated by receiving electric power supply. The assist motor 20 and the electric supercharger 51 (motor 62 of the electric supercharger 51) receive electric power from a common electric power source. In the present embodiment, a 48V-battery (not illustrated) is mounted in the vehicle, as an electric power source for these elements. In the present embodiment, the glow plug 16 also receives electric power supply from the battery. However, electric power after being converted into 12V is supplied to the glow plug 16.

The turbo supercharger 52 includes a turbine 67 that is rotated and driven by exhaust gas flowing through the exhaust passage 40, and the compressor 66 that is rotated in association with the turbine 67, and compresses intake air flowing through the intake passage 30. The compressor 66 is disposed at an upstream portion of the intake passage 30 with respect to the electric supercharger 51 (compressor 61), and the turbine 67 is disposed at an upstream portion of the exhaust passage 40 with respect to the catalytic converter 41. An exhaust bypass passage 68 for bypassing the turbine 67 is formed in the exhaust passage 40. A waste gate valve 69 capable of opening and closing the exhaust bypass passage 68 is provided in the exhaust bypass passage 68.

The EGR device 70 includes the EGR passage 71 for connecting the exhaust passage 40 and the intake passage 30, an EGR cooler 72 for cooling exhaust gas (EGR gas), which returns from the exhaust passage 40 to the intake passage 30 through the EGR passage 71, and an EGR valve 73 for adjusting a flow rate of EGR gas by opening and closing the EGR passage 71. The EGR passage 71 connects an upstream portion of the exhaust passage 40 with respect to an upstream end of the exhaust bypass passage 68, and a portion of the intake passage 30 downstream with respect to the intercooler 33 and upstream with respect to the surge tank 34.

The EGR device 70 according to the present embodiment is provided in such a way that a part of exhaust gas flowing through an upstream portion with respect to the turbine 67 is returned to a point of the intake passage 30 downstream with respect to the compressor 61. Alternatively, an EGR device for returning a part of exhaust gas flowing through a downstream portion with respect to the turbine 67 to the intake passage 30 upstream with respect to the compressor 66 may be provided, in addition to the EGR device 70.

### (2) Control System

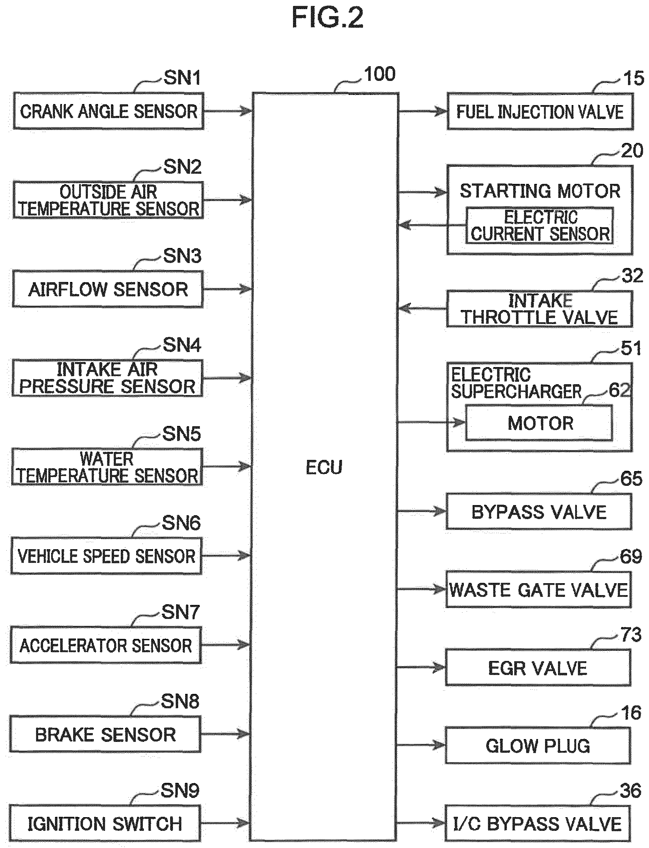

FIG. 2 is a block diagram illustrating a control system of the engine according to the present embodiment. An ECU 100 illustrated in FIG. 2 is a microprocessor for integrally controlling the engine, and is constituted of well-known CPU, ROM, RAM, and the like.

Detection information by various sensors is input to the ECU 100. Specifically, the ECU 100 is electrically connected to the crank angle sensor SN1, the outside air temperature sensor SN2, the airflow sensor SN3, the intake air pressure sensor SN4, and the water temperature sensor SN5. Various information detected by these sensors, for example, information on an engine speed, an outside air temperature, an intake air amount, an intake air pressure (supercharging pressure), an engine water temperature, and the like are respectively and successively input to the ECU 100.

A vehicle speed sensor SN6 for detecting a traveling speed (hereinafter, referred to as a vehicle speed) of the vehicle, an accelerator sensor SN7 for detecting an opening angle (hereinafter, referred to as an accelerator opening angle) of an accelerator pedal to be operated by a driver driving the vehicle, and a brake sensor SN8 for detecting an on/off state of a brake pedal to be operated by the driver are provided in the vehicle. Detection information by the sensors SN6, SN7, and SN8 is also successively input to the ECU 100. Further, an ignition switch SN9 is provided in the vehicle. The ignition switch SN9 is a switch operable by an occupant. The ignition switch SN9 is a switch for switching start/stop of the engine. When the ignition switch SN9 is operated to an ON-state, the ECU 100 determines that the engine is requested to be started.

The ECU 100 controls respective parts of the engine, while performing various determinations, calculations, and the like, based on input information from the sensors SN1 to SN8, and the switch SN9. Specifically, the ECU 100 is electrically connected to the fuel injection valve 15, the glow plug 16, the assist motor 20, the intake throttle valve 32, the electric supercharger 51 (motor 62 of the electric supercharger 51), the bypass valve 65, the I/C bypass valve 36, the waste gate valve 69, the EGR valve 73, and the like; and outputs a control signal to each of these devices, based on a result of the calculation and the like. The ECU 100 described above corresponds to a "control unit" in the claims.

For example, the ECU 100 calculates a load (request torque) of the engine, based on an accelerator opening angle to be detected by the accelerator sensor SN7, a vehicle speed to be detected by the vehicle speed sensor SN6, and the like; determines an amount (target injection amount) of fuel to be injected to the combustion chamber 6, based on the calculated load, and an engine speed to be detected by the crank angle sensor SN1; and controls the fuel injection valve 15 in such a way that fuel of an amount that coincides with the determined target fuel injection amount is injected to the combustion chamber 6.

Further, the ECU 100 sets a target supercharging pressure, based on an engine speed/load, and the like, and controls an opening angle of each of the bypass valve 65 and the waste gate valve 69, rotation of the motor 62 of the electric supercharger 51, and the like in such a way that an intake air pressure (supercharging pressure) to be detected by the intake air pressure SN4 coincides with the target supercharging pressure.

Furthermore, the engine according to the present embodiment has a so-called idling stop function. Specifically, the ECU 100 has a function of automatically stopping the engine and restarting the engine in a predetermined specific condition. For example, the ECU 100 determines whether a plurality of requirements such that a vehicle speed is substantially zero, the accelerator pedal is in an off-state (accelerator opening angle is zero), and the brake pedal is in an on-state are satisfied each time, based on detection values of the vehicle speed sensor SN6, the accelerator sensor SN7, the brake sensor SN8, and the like. When it is confirmed that all these requirements are satisfied, the ECU 100 determines that an automatic stop condition of the engine is satisfied. When the automatic stop condition is satisfied, the ECU 100 suspends fuel supply from the fuel injection valve 15, and automatically stops the engine.

Further, after the engine is automatically stopped, the ECU 100 determines whether a plurality of requirements such that the accelerator pedal is switched from an off-state to an on-state (accelerator opening angle is larger than zero), the brake pedal is switched from an on-state to an off-state, and a vehicle speed is increased to a predetermined value or larger, based on detection values of the sensors SN6 to SN8, and the like. When it is confirmed that one or more of the requirements is satisfied, the ECU 100 determines that a restart condition of the engine is satisfied. When the restart condition is satisfied, the ECU 100 forcibly rotates the engine body 1 by driving the assist motor 20, resumes fuel supply from the fuel injection valve 15, and restarts the engine.

### (3) Control when Engine is Started

Details on control (start control) at an engine start time are described. The engine start time in this section is a period from a time when a request to start the engine is received until a time when combustion is performed in all the cylinders 2 and the engine is completely exploded.

Engine startability is poor, when a temperature inside the combustion chamber 6 (inside the cylinder 2) immediately before the engine is started is low. For example, when a temperature inside the combustion chamber 6 is low, a compression end temperature of an air-fuel mixture is low, and engine startability is deteriorated. In view of the above, in the present embodiment, control modes of the intake throttle valve 32 and the like are changed according to a temperature inside the combustion chamber 6.

A temperature inside the combustion chamber 6 changes according to a temperature of a wall surface (hereinafter, referred to as a cylinder wall, as necessary) of the cylinder 2, consequently, an engine water temperature, and a temperature of air flowing into the combustion chamber 6, in other words, an outside air temperature. However, an engine water temperature also changes according to an outside air temperature. A temperature inside the cylinder 2 mainly changes according to an engine water temperature. In particular, at a key start time, which will be described later, an engine water temperature is substantially equal to an outside air temperature. In view of the above, an engine water temperature detected by the water temperature sensor SN5 is used as a temperature inside the combustion chamber 6. Alternatively, a temperature inside the combustion chamber 6 may be estimated by using an outside air temperature detected by the outside air temperature sensor SN2, an engine water temperature, and the like, and the control modes may be switched based on a value of the estimation. Further, when it is determined that a surrounding environment is a highland where a barometric pressure is low, based on a detection value of an atmospheric pressure sensor (not illustrated) for detecting an atmospheric pressure, an EGR amount being an amount of EGR gas to be introduced to the combustion chamber 6 may be changed.

In the following, control at an engine start time accompanied by an ignition-on operation by an occupant (operation of turning the ignition switch SN9 on) (hereinafter, this start is referred to as a key start, as necessary) is described. Also when the engine that has automatically stopped is restarted (hereinafter, also simply referred to as an engine restart, as necessary), control similar to the control at a key start time is performed. However, at an engine restart time, it is determined that a request to start the engine is received, when a restart condition is satisfied as described above, in place of an ignition-on operation. Therefore, in control at an engine restart time, a requirement that an ignition-on operation is performed in the following description is replaced by a requirement that a restart condition is satisfied.

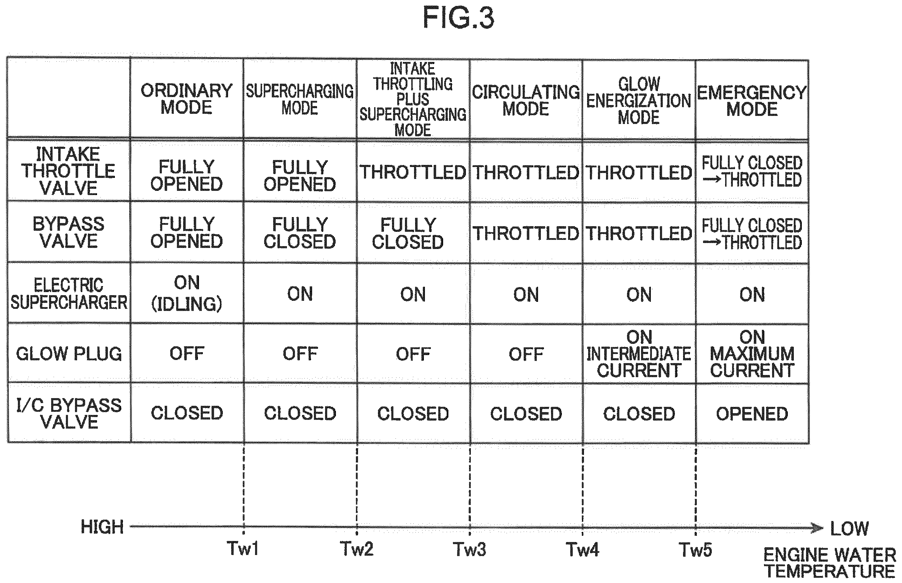

FIG. 3 is a table illustrating a relation among a control content on the intake throttle valve 32, the bypass valve 65, the electric supercharger 51, the glow plug 16, and the I/C bypass valve 36 in each of the control modes at a key start time, the control modes, and an engine water temperature. The table of FIG. 3 illustrates a control content of each parameter after rotation of the engine is started.

As illustrated in FIG. 3, six modes are set as the control modes at a key start time. The ECU 100 switches the control modes according to an engine water temperature.

The ECU 100 starts the engine in an ordinary mode, when an engine water temperature is equal to or higher than a predetermined first determination temperature Tw1. The ECU 100 starts the engine in a supercharging mode, when an engine water temperature is lower than the first determination temperature Tw1 but not lower than a predetermined second determination temperature Tw2 (<first determination temperature Tw1). The ECU 100 starts the engine in an intake throttling plus supercharging mode, when an engine water temperature is lower than the second determination temperature Tw2 but not lower than a predetermined third determination temperature Tw3 (<second determination temperature Tw2). The ECU 100 starts the engine in a circulating mode, when an engine water temperature is lower than the third determination temperature Tw3 but not lower than a predetermined fourth determination temperature Tw4 (<third determination temperature Tw3). The ECU 100 starts the engine in a glow energization mode, when an engine water temperature is lower than the fourth determination temperature Tw4 but not lower than a predetermined fifth determination temperature Tw5 (<fourth determination temperature Tw4). The ECU 100 starts the engine in an emergency mode, when an engine water temperature is lower than a fifth determination temperature Tw5.

The first determination temperature Tw1, the second determination temperature Tw2, the third determination temperature Tw3, the fourth determination temperature Tw4, and the fifth determination temperature Tw5 are, for example, respectively set to about 60 °C, about 20 °C, about 0 °C, about -10 °C, and about -30 °C.

A temperature inside the cylinder 2, when an engine water temperature is equal to the first determination temperature Tw1, corresponds to a "first reference temperature" in the claims. A temperature inside the cylinder 2, when an engine water temperature is equal to the fourth determination temperature Tw4, corresponds to a "second reference temperature" in the claims.

In the following, a state that an engine water temperature is equal to or higher than the first determination temperature Tw1 is referred to as a completely warm state, a state that an engine water temperature is lower than the first determination temperature Tw1 but not lower than the second determination temperature Tw2 is referred to as a first cold state, a state that an engine water temperature is lower than the second determination temperature Tw2 but not lower than the third determination temperature Tw3 is referred to as a second cold state, a state that an engine water temperature is lower than the third determination temperature Tw3 but not lower than the fourth determination temperature Tw4 is referred to as a third cold state, a state that an engine water temperature is lower than the fourth determination temperature Tw4 but not lower than the fifth determination temperature 54 is referred to as a fourth cold state, and a state that an engine water temperature is lower than the fifth determination temperature Tw4 is referred to as an extremely cold state.

### (3-1) Ordinary Mode

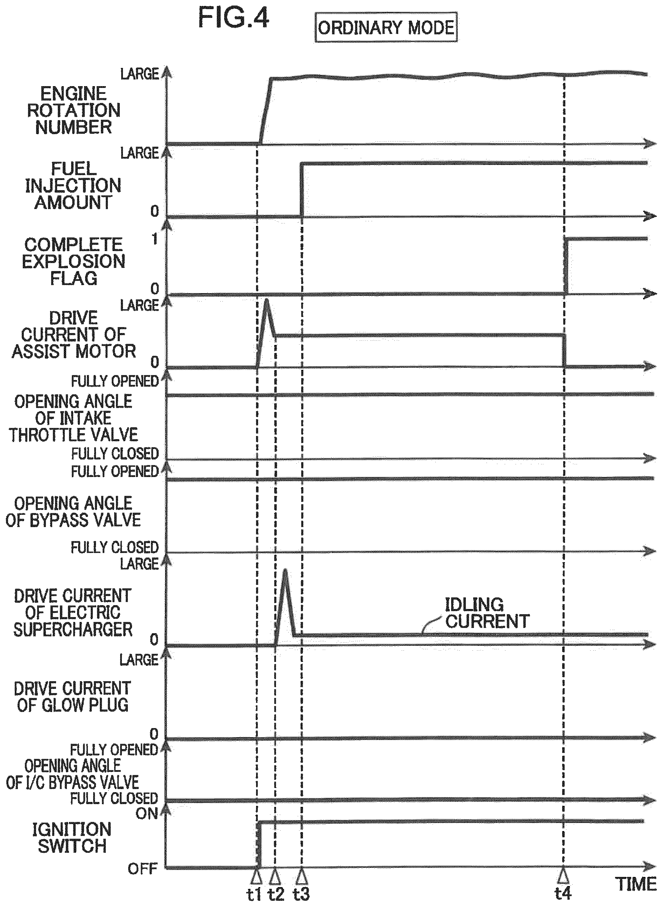

FIG. 4 is a diagram schematically illustrating a timewise change of each parameter, when the engine is started in a completely warm state, and when the engine is started in an ordinary mode. FIG. 4 illustrates, in this order from an upper side, each change in an engine rotation number (engine speed), a fuel injection amount being an amount of fuel to be injected into the combustion chamber 6 by the fuel injection valve 15, a complete explosion flag, drive current of the assist motor 20 (electric current to be supplied to the assist motor 20), an opening angle of the intake throttle valve 32, an opening angle of the bypass valve, drive current of the electric supercharger 51 (motor 62 of the electric supercharger 51), drive current of the glow plug 16 (energization current to the glow plug 16), an opening angle of the I/C bypass valve 36, and a signal of the ignition switch SN9. The complete explosion flag is a flag such that the flag is set to 1, when the engine is completely exploded, and the flag is set to 0 unless otherwise. Determination as to whether the engine is completely exploded is made, for example, based on an output value of an exhaust gas O2 sensor disposed in the exhaust passage 40 and configured to detect an oxygen concentration within exhaust gas. Specifically, when the oxygen concentration within exhaust gas falls below a predetermined value, it is determined that the engine is completely exploded. Further, the complete explosion flag is set to 0, when driving of the engine is stopped (when the engine rotation number is lowered to the vicinity of 0).

In the ordinary mode, first, immediately after a time t1 when an ignition-on operation is performed, the assist motor 20 is driven. At this occasion, high electric current for starting to drive the assist motor 20, in other words, inrush current is supplied to the assist motor 20. Therefore, drive current of the assist motor 20 becomes an extremely large value immediately after the time t1, and thereafter, is lowered to a predetermined value.

When driving of the assist motor 20 is started, the crankshaft 7 is forcibly rotated by the assist motor 20. As described above, in the present embodiment, the engine rotation number is increased up to about 800 rpm by the assist motor 20, and immediately after the time t1, the engine rotation number increases up to a high value of about 800 rpm.

Next, at a time t3 after the time t1, fuel is injected from the fuel injection valve 15 into the combustion chamber 6 of the cylinder 2 entering a compression stroke. The injected fuel self-ignites and combusts within the combustion chamber 6, and pushes down the piston 5. Thus, autonomous rotation of the engine body 1 is started. Subsequently, fuel is injected similarly from the fuel injection valve 15 in an order to a cylinder entering a compression stroke following the cylinder (first explosive cylinder) in which combustion is performed for the first time, a cylinder entering a compression stroke following the cylinder, and so on.

FIG. 4 illustrates a relatively long interval between the time t1 and the time t3. This is for the purpose of clarifying a change in each parameter. In the present embodiment, as described above, since the engine rotation number is increased immediately by the assist motor 20, an interval from the time t1 to the time t3 is very short, and fuel injection is started immediately after driving of the assist motor 20 is started. This is similar to the other modes to be described in the following.

At a time t4 when combustion is performed in all the cylinders 2, and the engine is completely exploded, start control is finished, and driving of the assist motor 20 is stopped. After initial explosion (after first combustion in the cylinder 2 is finished), rotation of the crankshaft 7 is faster than rotation of the assist motor 20, and the assist motor 20 is rotated by the rotation of the crankshaft 7.

As described above, the ordinary mode is a mode to be performed, when the engine is started in a state that an engine water temperature is sufficiently high, which is equal to or higher than the first determination temperature Tw1. Therefore, in the ordinary mode, it is possible to appropriately start the engine, without performing control of throttling the intake throttle valve 32, control of supercharging intake air by the electric supercharger 51, and the like, as will be described later.

Therefore, in the ordinary mode, after driving of the assist motor 20 is started (after the time t1), the intake throttle valve 32 and the bypass valve 65 are fully opened, and the I/C bypass valve 36 is fully closed. When the engine is stopped, basically, the intake throttle valve 32 and the bypass valve 65 are fully opened, and the I/C bypass valve 36 is fully closed. Therefore, in the ordinary mode, opening angles of these valves remain unchanged before and after driving of the assist motor 20 is started. Further, in the ordinary mode, drive current of the glow plug 16 is kept zero, energization of the glow plug 16 is not performed, and the glow plug 16 is kept in a driving stop state.

In the ordinary mode, as described above, it is not necessary to drive the electric supercharger 51 in order to start the engine. However, in the present embodiment, driving of the electric supercharger 51 is started before the engine is completely exploded in order to prepare for acceleration and the like after the engine is started (completely exploded).

However, as described above, it is necessary to supply high electric current to the assist motor 20, when driving of the assist motor 20 is started. Further, it is necessary to supply high electric current to the electric supercharger 51 as inrush current, also when driving of the electric supercharger 51 (motor 62 of the electric supercharger 51) is started. In view of the above, in the present embodiment, in order to avoid that extremely high current is output from a battery by overlapping of the inrush current, and a charged amount of the battery is instantaneously lowered, and in order to suppress degradation of the battery accompanied by output of high electric current, a driving start timing of the assist motor 20 and a driving start timing of the electric supercharger 51 are set different from each other.

Specifically, as illustrated in FIG. 4, in the ordinary mode, first, the assist motor 20 is driven at the time t1, and thereafter, at a time t2, driving of the electric supercharger 51 is started. Specifically, the electric motor 51 is driven at the time t2 after lapse of a predetermined standby time from a time when driving of the assist motor 20 is started. The standby time is set to a time longer than a time during which inrush current is supplied to the assist motor 20, and a time longer than a time from start of energization to the assist motor 20 until a time when drive current of the assist motor 20 is lowered to a predetermined value.

Further, in the ordinary mode, drive current after driving of the electric supercharger 51 is started is set to idling current, which is lowest among levels of electric current at which rotation of the electric supercharger 51 (compressor 61 of the electric supercharger 51) is maintained. Thus, the electric supercharger 51 is set to an idling state.

FIG. 4 exemplifies a case that after the time t4, in other words, after starting of the engine is completed, the intake throttle valve 32 is fully opened, and drive current of the electric supercharger 51 is set to idling current. After starting of the engine is completed, an opening angle of the intake throttle valve 32, an opening angle of the bypass valve 65, and drive current of the electric supercharger 51 are changed as necessary according an opening angle of the accelerator pedal and the like. Likewise, after start of the engine is completed, a fuel injection amount is also changed according to an accelerator opening angle, a vehicle speed, and the like. For example, when an engine rotation number is small after the engine is started in a completely warm state, the intake throttle valve 32 may be closed from a fully opened state in order to promote EGR gas to flow into the intake passage 30, and further increase a temperature of intake air.

Further, a timing (time t3) at which fuel injection is started, and a timing (time t2) at which driving of the electric supercharger 51 is started are not limited to the example illustrated in FIG. 4. These timings may be reversed with respect to the illustrated example or these timings may be the same as each other.

### (3-2) Supercharging Mode

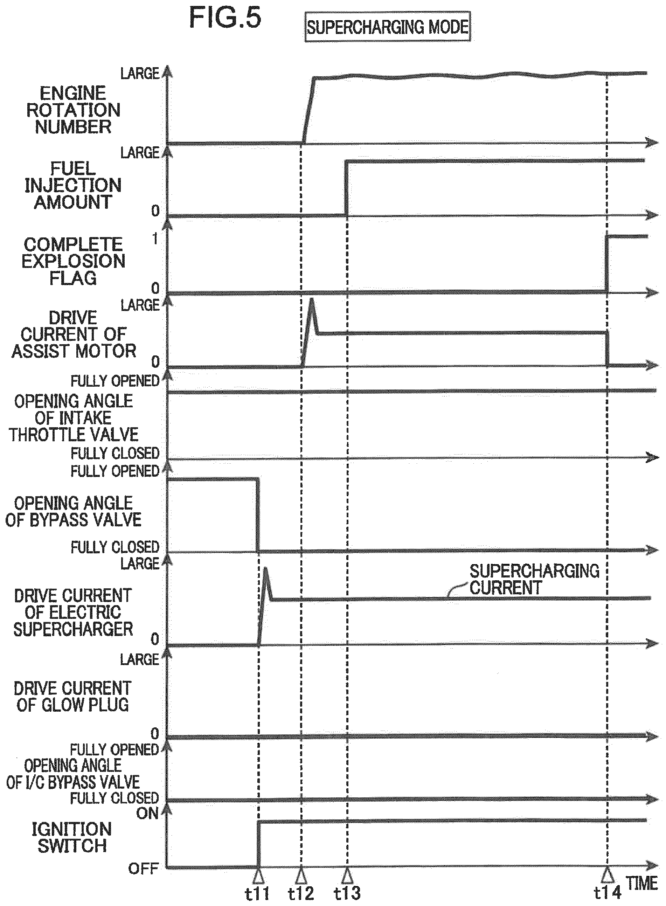

FIG. 5 is a diagram associated with FIG. 4, and is a diagram schematically illustrating a timewise change of each parameter, when the engine is started in a supercharging mode.

Unlike the ordinary mode, in the supercharging mode, for example, substantially simultaneously when an ignition-on operation is performed at a time t11, driving of the electric supercharger 51 (motor 62 of the electric supercharger 51) is started. Further, drive current of the electric supercharger 51 is set to supercharging current higher than idling current, after inrush current is supplied to the electric supercharger 51. Furthermore, in the supercharging mode, substantially simultaneously when the electric supercharger 51 is driven, the bypass valve 65 is fully closed. Moreover, in the supercharging mode, after drive current of the electric supercharger 51 is lowered to a predetermined value (at a time t12), the assist motor 20 is driven.

In this way, in the supercharging mode, first, driving of the electric supercharger 51 is started, and the bypass valve 65 is fully closed. Thereafter, driving of the assist motor 20 is started. Further, for the above-described reason, driving of the assist motor 20 is started after supply of inrush current to the electric supercharger 51 is finished so as not to overlap a timing at which inrush current is supplied to the electric supercharger 51, and a timing at which inrush current is supplied to the assist motor 20.

On the other hand, also in the supercharging mode, similarly to the ordinary mode, the intake throttle valve 32 is kept fully opened before and after the engine is started, drive current of the glow plug 16 is kept zero, and the I/C bypass valve 36 is kept fully closed.

By the above-described control, in the supercharging mode, all the intake air (air) introduced to the intake passage 30 is introduced to the electric supercharger 51 without passing through the bypass passage 64, and supercharged by the electric supercharger 51.

Drive current of the electric supercharger 51 is set to supercharging current at least until a time t14 when complete explosion of the engine is finished. An opening angle of the bypass valve 65 is also kept fully closed at least until the time t14 when complete explosion of the engine is finished.

Also in the supercharging mode, similarly to the ordinary mode, when driving of the assist motor 20 is started at the time t12, the engine rotation number is increased up to a high value of about 800 rpm. Then, at a time t13 after driving of the assist motor 20 is started, fuel injection is started. Further, also in the supercharging mode, similarly to the ordinary mode, driving of the assist motor 20 is stopped, when the engine is completely exploded at the time t14.

In this way, when the engine is started in the first cold state, the engine is started in the supercharging mode, the bypass valve 65 is fully closed, the intake throttle valve 32 is fully opened, and the electric supercharger 51 is driven, whereby all the intake air (air) introduced to the intake passage 30 is introduced to each of the combustion chambers 6 in a state that the intake air is supercharged by the electric supercharger 51. Therefore, it is possible to secure a large amount of intake air to be introduced to each of the combustion chambers 6. Thus, combustion of an air-fuel mixture within the combustion chambers 6 is promoted, and engine startability is enhanced.

In particular, when the engine is started in a state that an engine water temperature is low, intake air may leak to the outside from the cylinder 2 through a clearance between a piston and a cylinder wall. In contrast, supercharging intake air by the electric supercharger 51, and introducing a large amount of intake air to the cylinder 2 enables to allow an amount of intake air necessary for combustion to remain in the cylinder 2, even when the above-described leakage occurs, and appropriately combust an air-fuel mixture.

Further, driving of the electric supercharger 51 is started before the assist motor 20 is driven. Therefore, it is possible to introduce intake air supercharged immediately after rotation of the engine is started into the combustion chamber 8, while avoiding overlapping of inrush current.

The example of FIG. 5 illustrates a case that, also after start of the engine is finished, the bypass valve 65 is kept fully closed, and drive current of the electric supercharger 51 is set to supercharging current. However, after start of the engine is finished, an opening angle of the bypass valve 65, an opening angle of the intake throttle valve 32, and drive current of the electric supercharger 51 are changed as necessary according to an opening angle of the accelerator pedal and the like. Likewise, after start of the engine is finished, a fuel injection amount is also changed according to an accelerator opening angle, a vehicle speed, and the like.

### (3-3) Intake Throttling plus Supercharging Mode

As described above, supercharging intake air by the electric supercharger 51 enables to increase an amount of intake air to be introduced to the combustion chamber 6, and promote combustion of an air-fuel mixture. However, when a temperature of intake air is low, it is necessary to introduce a considerably large amount of intake air to appropriately combust an air-fuel mixture. This may increase a resistance exerted on the piston 5, and may make it difficult to sufficiently enhance engine startability.

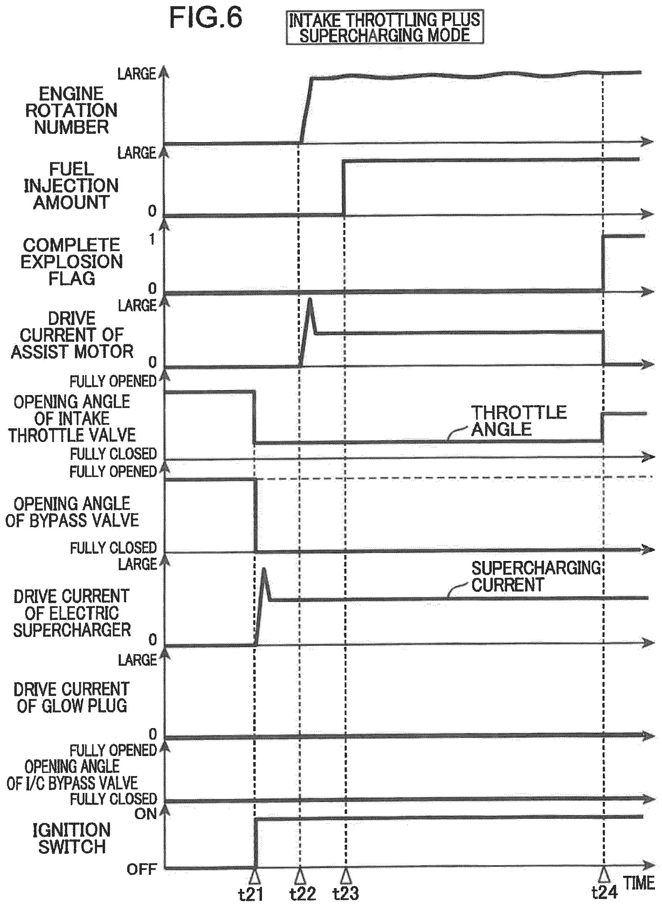

In view of the above, the ECU 100 starts the engine in an intake throttling plus supercharging mode, when the engine is in the second cold state in which an engine water temperature is lower than the second determination temperature Tw2 but not lower than the third determination temperature Tw3. FIG. 6 is a diagram associated with FIG. 4, and is a diagram schematically illustrating a timewise change of each parameter, when the engine is started in the intake throttling plus supercharging mode.

Also in the intake throttling plus supercharging mode, similarly to the supercharging mode, at a time earlier than a time t22 when driving of the assist motor 20 is started, for example, at a time t21 substantially simultaneously when an ignition-on operation is performed, driving of the electric supercharger 51 (motor 62 of the electric supercharger 51) is started. Further, after being set to high inrush current, drive current of the electric supercharger 51 is set to supercharging current higher than idling current. Furthermore, substantially simultaneously when the electric supercharger 51 is driven, the bypass valve 65 is fully closed. Then, at the time t22 after supply of inrush current to the electric supercharger 51 is finished, driving of the assist motor 20 is started.

On the other hand, in the intake throttling plus supercharging mode, substantially simultaneously when driving of the electric supercharger 51 is started, an opening angle of the intake throttle valve 32 is reduced to a throttle angle (toward a close side), as compared with a fully opened state (within a range on an open side from a fully closed state). The throttle angle is set to a predetermined small angle (e.g. about 10 to 20 %) with respect to an opening angle at a flow saturation point.

As described above, "a fully closed state" in the present specification does not necessarily mean a state that a valve is closed to a position (truly fully closed position) at which a valve clearance becomes completely zero. For example, there is a case that a valve is allowed to close up to a position slightly opened from a truly fully closed position (opening angle at which minute leakage of intake air occurs) for the purpose of preventing clogging of a valve, and the like. In this case, not a truly fully closed position but an opening angle limit, which is slightly opened the truly fully closed position becomes a "fully closed state". Further, in the present specification, a "flow saturation point" indicates an opening angle at which a pressure difference between a downstream portion and an upstream portion of a valve becomes zero, and an opening angle at which a flow rate of intake air passing through the valve does not increase any more, even when the opening angle is further increased. The opening angle at the flow saturation point differs depending on an operating condition of the engine. In an operating condition in which the intake throttling plus supercharging mode is performed, the opening angle at the flow saturation point becomes about 20 %, for example.

Drive current of the electric supercharger 51 is set to supercharging current at least until a time t24 when complete explosion of the engine is finished. The bypass valve 65 is kept fully closed at least until the time t24 when complete explosion of the engine is finished. Further, an opening angle of the intake throttle valve 32 is also kept to the throttle angle at least until the time t24 when complete exposition of the engine is finished.

Also in the intake throttling plus supercharging mode, at a time t23 after driving of the assist motor 20 is started, fuel injection is started. Further, also in the intake throttling plus supercharging mode, at the time t24 when the engine is completely exploded (when start of the engine is completed), driving of the assist motor 20 is stopped. Furthermore, also in the intake throttling plus supercharging mode, before and after the engine is started, drive current of the glow plug 16 is kept zero, and the I/C bypass valve 36 is kept fully closed.

By the above-described control, in the intake throttling plus supercharging mode, all the intake air (atmospheric air) introduced to the intake passage 30 is introduced to the electric supercharger 51 without passing through the bypass passage 64. Then, after being supercharged by the electric supercharger 51, the intake air flows into the combustion chamber 6 through the intake throttle valve 32, which is set to a small opening angle.

In this way, when the engine is started in the second cold state, a temperature of intake air is increased, while securing an amount (mass) of intake air to be introduced to the combustion chamber 6 by supercharging intake air by the electric supercharger 51. Further, setting an opening angle of the intake throttle valve 32 to the throttle angle allows intake air to pass through a relatively small clearance between the intake passage 30 and the intake throttle valve 32. Then, a temperature of the intake air is further increased by a resistance generated when the intake air passes through the relatively small clearance. Therefore, also when the engine is started in the second cold state in which an engine water temperature is lower than the first cold state, engine startability is secured.

The example of FIG. 6 illustrates a case that, after complete explosion of the engine is finished, the bypass valve 65 is fully closed, drive current of the electric supercharger 51 is set to supercharging current, and an opening angle of the intake throttle valve 32 is changed to an open side. However, after complete explosion of the engine is finished, an opening angle of the bypass valve 65, the opening angle of the intake throttle valve 32, and drive current of the electric supercharger 51 are changed as necessary according to an opening angle of the accelerator pedal, and the like. Likewise, after complete explosion of the engine is finished, a fuel injection amount is also changed according to an accelerator opening angle, a vehicle speed, and the like.

### (3-4) Circulating Mode

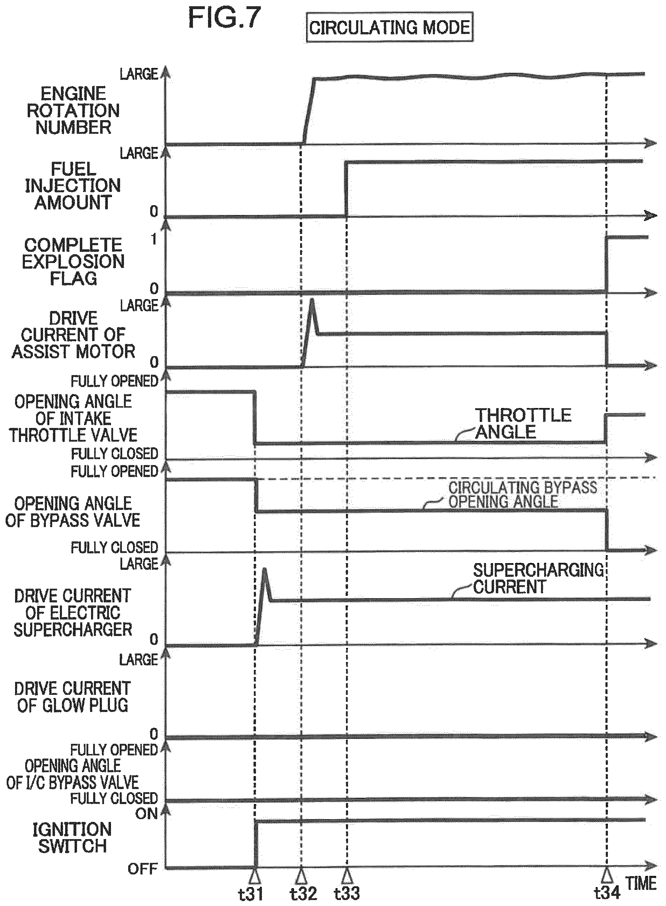

When the engine is in the third cold state in which an engine water temperature is lower than the third determination temperature Tw3 but not lower than the fourth determination temperature Tw4, and it is difficult to appropriately start the engine, even when the engine is started in the intake throttling plus supercharging mode, the ECU 100 starts the engine in the circulating mode. FIG. 7 is a diagram associated with FIG. 4, and is a diagram schematically illustrating a timewise change of each parameter, when the engine is started in the circulating mode.

Also in the circulating mode, similarly to the intake throttling plus supercharging mode, before a time t32 when driving of the assist motor 20 is started, for example, at a time t31 substantially simultaneously when an ignition-on operation is performed, driving of the electric supercharger 51 (motor 62 of the electric supercharger 51) is started. Further, after reaching high inrush current, drive current of the electric supercharger 51 is set to supercharging current higher than idling current. Then, at the time t32 after supply of inrush current to the electric supercharger 51 is finished, driving of the assist motor 20 is started.

Further, also in the circulating mode, similarly to the intake throttling plus supercharging mode, substantially simultaneously when driving of the electric supercharger 51 is started, an opening angle of the intake throttle valve 32 is reduced to the throttle angle (toward a close side) from a fully opened state (within a range on an open side from a fully closed state). The throttle angle in the circulating mode is set to a predetermined small angle (e.g. about 10 to 20 %), as compared with the opening angle at the flow saturation point, similarly to the throttle angle in the intake throttling plus supercharging mode.

On the other hand, in the circulating mode, substantially simultaneously when driving of the electric supercharger 51 is started, an opening angle of the bypass valve 65 is switched from a fully opened state to a reduced angle (toward a close side), and the bypass passage 64 is narrowed. At this occasion, an opening angle of the bypass valve 65 is set to a circulating bypass opening angle, which is slightly larger than the opening angle of the intake throttle valve 32. In the present embodiment, the circulating bypass opening angle is set to a predetermined opening angle smaller than the opening angle at the flow saturation point. In other words, the circulating bypass opening angle is set to an opening angle smaller than an opening angle at which a pressure difference between an upstream portion and a downstream portion of the bypass valve 65 becomes zero and a flow rate of intake air passing through the bypass valve 65 does not increase any more, even when the opening angle of the bypass valve 65 is further increased.

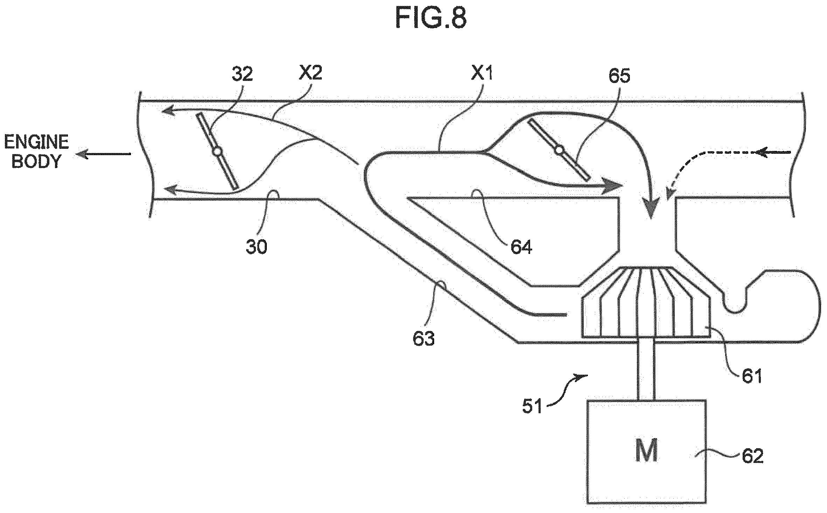

Thus, as illustrated in FIG. 8, a flow such that a part of intake air compressed in the electric supercharger 51 (compressor 61 of the electric supercharger 51) and discharged from the main passage 63 flows back through the bypass passage 64 and is introduced again to the electric supercharger 51 (compressor 61 of the electric supercharger 51), in other words, an intake air circulating flow is formed (see the arrow X1 in FIG. 8). Specifically, driving and rotating the electric supercharger 51 (compressor 61) in a state that an opening angle of the intake throttle valve 32 is set smaller than an opening angle of the bypass valve 65 enables to form an intake air flow directing from the intake throttle valve 32 to the bypass valve 65 (in other words, flowing back through the bypass passage 64), and form a flow of allowing intake air that has flowed back through the bypass passage 64 to return to the compressor 61 again. In other words, the intake throttle valve 32 and the bypass valve 65 are respectively controlled to opening angles at which the above-described intake air circulating flow is formed.

The intake air circulating flow is continuously formed at least until a time t34 when the engine is completely exploded. In other words, during a period from the time t31 to at least the time t34, an opening angle of the intake throttle valve 32 is kept to the above-described throttle angle, an opening angle of the bypass valve 65 is kept to the above-described circulating bypass opening angle, and drive current of the electric supercharger 51 is kept to supercharging current (after inrush current is supplied).

Also in the circulating mode, at a time t33 after driving of the assist motor 20 is started, fuel injection is started. Further, when the engine is completely exploded at the time t34 (when start of the engine is completed), driving of the assist motor 20 is stopped. Further, also in the circulating mode, similarly to the intake throttling plus supercharging mode, before and after the engine is started, drive current of the glow plug 16 is kept zero, and the I/C bypass valve 36 is kept fully closed.

In this way, when the engine is started in the third cold state, the above-described intake air circulating flow is formed.

When the above-described intake air circulating flow is formed, a temperature of intake air through a circulating path of the intake air circulating flow (the main passage 63 and the bypass passage 64) is increased by repeated compression of intake air by the electric supercharger 51 (compressor 61 of the electric supercharger 51). Further, a high resistance is applied to intake air by allowing the intake air flowing back through the bypass passage 64 to pass through a clearance around the bypass valve 65 having a small opening angle, which is a portion having a small flow channel area. Then, the temperature of the intake air is further increased by heat energy generated by the resistance. Therefore, the temperature of the intake air is increased within a very short time up to a temperature (e.g. around 80 to 100 °C), which is sufficiently higher than an outside air temperature. Allowing a part of the intake air to branch out from the circulating flow of such a high temperature, and pass through the intake throttle valve 32 enables to form an intake air flow directing to the engine body 1 through the intake passage 30 downstream of the intake throttle valve 32 (see the arrow X2). Therefore, high-temperature intake air is supplied to the engine body 1. Furthermore, the intake air directing to the engine body 1, namely, toward the combustion chamber 6 passes through a clearance around the intake throttle valve 32 having a small opening angle. Therefore, the temperature of the intake air to be introduced to the combustion chamber 6 is further increased by heat energy generated by a resistance when the intake air passes through the clearance. Thus, when the engine is started in the third cold state, intake air having a sufficiently high temperature is introduced to the combustion chamber 6, and also when the engine is started in the third cold state, engine startability is secured.

In the present embodiment, in the circulating mode, supercharging power (supercharging amount) of the electric supercharger 51 is set high, as an engine water temperature, consequently, an outside air temperature, and a temperature inside the cylinder 2 before the engine is started are lower. Therefore, it is possible to appropriately increase a temperature of intake air both in a case where an engine water temperature is high and in a case where an engine water temperature is low, and it is possible to avoid supercharging power of the electric supercharger 51 from excessively increasing, when an engine water temperature is relatively high.

The example of FIG. 7 illustrates a case that, after complete explosion of the engine is finished, the bypass valve 65 is fully closed, drive current of the electric supercharger 51 is kept to supercharging current, and an opening angle of the intake throttle valve 32 is changed to an open side. However, after complete explosion of the engine is finished, an opening angle of the bypass valve 65, an opening angle of the intake throttle valve 32, and drive current of the electric supercharger 51 are changed as necessary according to an opening angle of the accelerator pedal, and the like. Likewise, after complete explosion of the engine is finished, a fuel injection amount is also changed according to an accelerator opening angle, a vehicle speed, and the like.

### (3-5) Glow Energization Mode

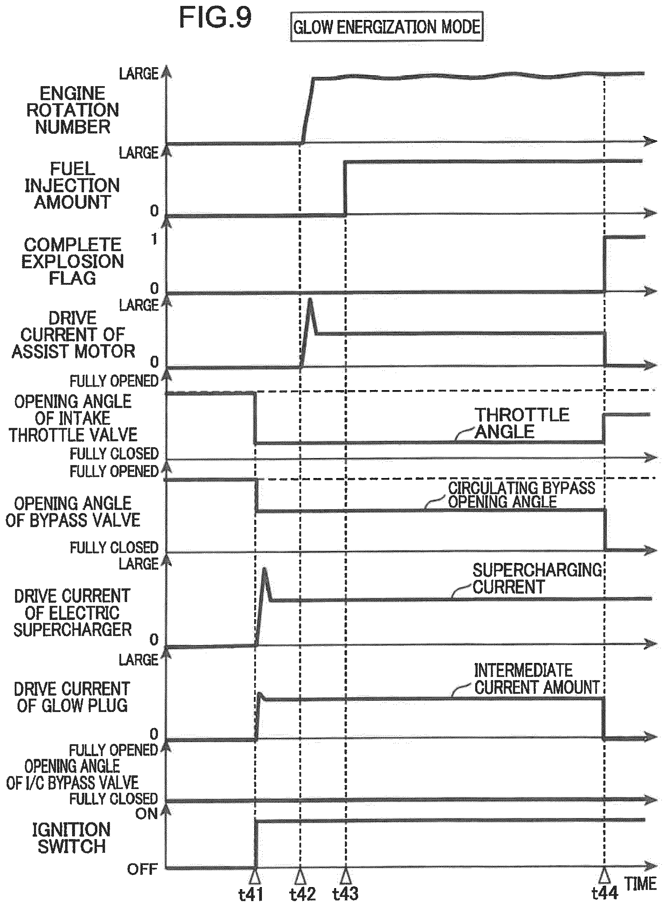

When the engine is in the fourth cold state in which an engine water temperature is lower than the fourth determination temperature Tw4 but not lower than the fifth determination temperature Tw5, and when it is difficult to appropriately start the engine even when the engine is started in the circulating mode, the ECU 100 starts the engine in the glow energization mode. FIG. 9 is a diagram associated with FIG. 4, and is a diagram schematically illustrating a timewise change of each parameter, when the engine is started in the glow energization mode.

As illustrated in FIG. 9, in the glow energization mode, the assist motor 20, the intake throttle valve 32, the bypass valve 65, and the electric supercharger 51 are respectively controlled similarly to the circulating mode. In other words, also in the glow energization mode, during a period from a time t41 substantially simultaneously when an ignition-on operation is performed until at least a time t44 when the engine is completely exploded, an opening angle of the intake throttle valve 32 is set to the throttle angle, which is smaller than the opening angle at the flow saturation point; an opening angle of the bypass valve 65 is set to a circulating bypass opening angle, which is slightly larger than an opening angle of the intake throttle value 32 but slightly smaller than the opening angle at the flow saturation point; and drive current of the electric supercharger 51 is set to supercharging current, whereby the above-described intake air circulating flow is formed. Further, at a time t42 after supply of inrush current to the electric supercharger 51 is finished, driving of the assist motor 20 is started.

On the other hand, in the glow energization mode, unlike the circulating mode, the glow plug 16 is energized when the engine is started.

Specifically, at the time t41 earlier than the time t42 when driving of the assist motor 20 is started, for example, at the time t41 substantially simultaneously when an ignition-on operation is performed, drive current of the glow plug 16 (energization current to the glow plug 16) is set to a value larger than zero, and energization to the glow plug 16 is started. Energization to the glow plug 16 is continued at least until the time t44 when the engine is completely exploded. In the example of FIG. 9, energization to the glow plug 16 is stopped at the time t44.

In this way, in the present embodiment, the glow plug 16 is energized before driving of the assist motor 20 is started, and a temperature increase of the glow plug 16 (distal end of the glow plug 16) is started. Therefore, it is possible to effectively increase a temperature inside the combustion chamber 6 or a temperature of fuel supplied to the combustion chamber 6 immediately after driving of the assist motor 20 is started, specifically, immediately after rotation of the engine is started.

In the glow energization mode, the glow plug 16 is energized as described above. However, an energization amount of the glow plug 16 is set smaller than a maximum energization amount being a maximum value of energization amount capable of energizing the glow plug 16. In other words, drive current (energization current) of the glow plug 16 is set to intermediate current, which is lower than maximum current being a maximum value of electric current suppliable to the glow plug 16. For example, whereas the maximum current is about 40 A, the intermediate current is set to about 5 to 30 A. In the present embodiment, the intermediate current is set to increase, as an engine water temperature increases.

Also in the glow energization mode, at a time t43 after driving of the assist motor 20 is started, fuel injection is started, and at the time t44 when the engine is completely exploded (start of the engine is completed), driving of the assist motor 20 is stopped. Further, also in the circulating mode, similarly to the intake throttling plus supercharging mode, before and after the engine is started, the I/C bypass valve 36 is kept fully closed.

In this way, when the engine is started in the fourth cold state, a temperature of intake air introduced to the cylinder 2 is increased by the glow plug 16, and gasification of fuel injected into the cylinder 2 is promoted, in addition to an advantage that repeatedly compressing intake air by the electric supercharger 51 (compressor 61 of the electric supercharger 51) and allowing the intake air that has flowed back through the bypass passage 64 to pass through the bypass valve 65 having a small opening angle and a clearance around the intake throttle valve 32 enables to increase a temperature of intake air. Therefore, also when the engine is started in the fourth cold state, engine startability becomes satisfactory.

In this way, a temperature of intake air is increased to a relatively high temperature by repeated compression of intake air by the electric supercharger 51 as described above, and application of the above-described heat energy. Therefore, in the glow energization mode, it is possible to appropriately start the engine, while setting drive current of the glow plug 16 to intermediate current lower than maximum current as described above. Thus, it is possible to suppress early deterioration of the glow plug 16.

Further, forming the intake air circulating flow and throttling the intake throttle valve 32 suppresses a flow rate of intake air into the cylinder 2. Therefore, it is possible to suppress the glow plug 16 from being cooled by impingement of intake air onto the glow plug 16 (distal end of the glow plug 16), and it is possible to efficiently increase a temperature of intake air inside the cylinder 2 and fuel by the glow plug 16. When control of adjusting an energization amount to the glow plug 16 is performed in such a way that the glow plug 16 achieves a predetermined target temperature so as to suppress temperature lowering of the glow plug 16, it is necessary to increase the energization amount to the glow plug 16 so as to compensate for an amount by which the glow plug 16 is cooled by intake air. This may promote deterioration of the glow plug 16. In contrast, in the present embodiment, since temperature lowering of the glow plug 16 is suppressed as described above, it becomes possible to prevent early deterioration of the glow plug 16, while suppressing an increase in energization amount to the glow plug 16.

In this way, in the glow energization mode, basically, an energization amount (drive current/energization current) to the glow plug 16 is suppressed. However, when the electric supercharger 51 is out of order, and supercharging is not appropriately performed, the energization amount may increase, as compared with a case where the electric supercharger 51 is not out of order. In this case, an energization amount (drive current/energization current) to the glow plug 16 may be set to a maximum energization amount (maximum current) depending on an engine water temperature.

Further, in the glow energization mode, when the glow plug 16 is out of order, supercharging power of the electric supercharger 51 (compressor 61) is enhanced. Specifically, when the glow plug 16 is out of order, drive current of the electric supercharger 51 is increased, as compared with a value when the glow plug 16 is not out or order.

The example of FIG. 9 illustrates a case that, after complete explosion of the engine is finished, the bypass valve 65 is fully closed, drive current of the electric supercharger 51 is kept to supercharging current, and an opening angle of the intake throttle valve 32 is changed to an open side. However, after complete explosion of the engine is finished, an opening angle of the bypass valve 65, an opening angle of the intake throttle valve 32, and drive current of the electric supercharger 51 are changed as necessary according to an opening angle of the accelerator pedal and the like. Likewise, after complete explosion of the engine is finished, a fuel injection amount is also changed according to an accelerator opening angle, a vehicle speed, and the like.

### (3-6) Emergency Mode

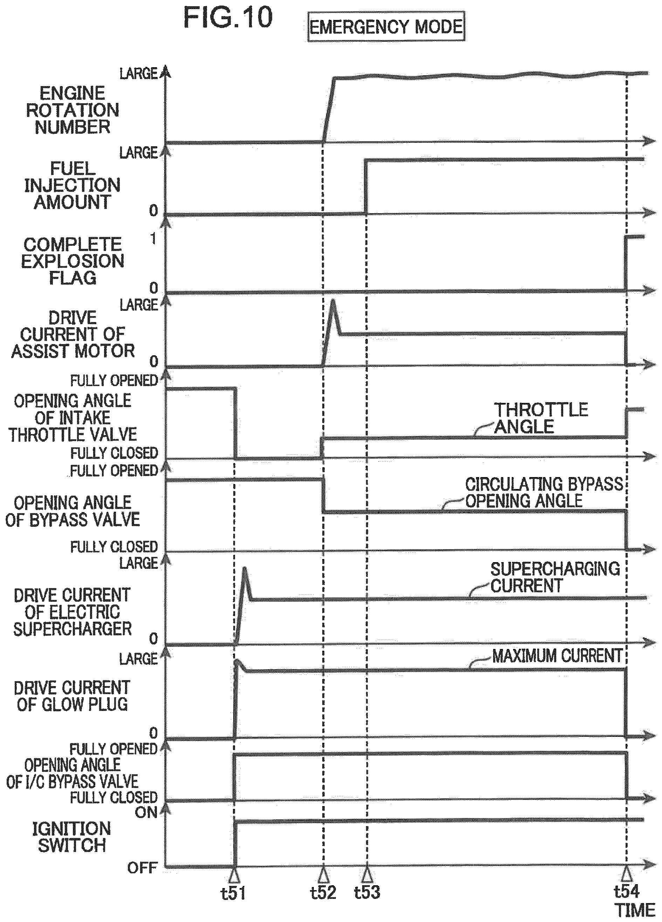

When the engine is in the extremely cold state in which an engine water temperature is lower than the fifth determination temperature Tw5, in other words, an outside air temperature is lower than the fifth determination temperature Tw5, and when it is necessary to securely start the engine at an early stage, the ECU 100 starts the engine in the emergency mode. FIG. 10 is a diagram associated with FIG. 4, and is a diagram schematically illustrating a timewise change of each parameter, when the engine is started in the glow energization mode.

As illustrated in FIG. 10, also in the emergency mode, similarly to the glow energization mode, at a time t51 earlier than a time t52 when driving of the assist motor 20 is started, and at the time t51 substantially simultaneously when an ignition-on operation is performed, energization to the glow plug 16 is started. Further, substantially simultaneously when energization to the glow plug 16 is started, driving of the electric supercharger 51 is started. Then, at the time t52 after supply of inrush current to the electric supercharger 51 is finished, driving of the assist motor 20 is started, and at a time t53 thereafter, fuel injection is started.

In this way, also in the emergency mode, before driving of the assist motor 20 is started, the glow plug 16 is energized, and a temperature increase of the glow plug 16 (distal end of the glow plug 16) is started. Thus, it is possible to effectively increase a temperature inside the combustion chamber 6 and a temperature of fuel supplied to the combustion chamber 6 by the glow plug 16 immediately after driving of the assist motor 20 is started, specifically, immediately after rotation of the engine is started.

However, in the emergency mode, unlike the glow energization mode, drive current of the glow plug 16 is set to maximum current, and a temperature of a distal end of the glow plug 16 is increased to a maximum temperature. Specifically, very high inrush current is supplied to the glow plug 16 at the time t51, and drive current of the glow plug 16 thereafter is set to maximum current. Drive current of the glow plug 16 is kept to maximum current at least until a time t54 when the engine is completely exploded. In the example of FIG. 10, energization to the glow plug 16 is stopped at the time t54. However, energization to the glow plug 16 may be continued after the time t54.

Further, in the emergency mode, unlike the glow energization mode, substantially simultaneously when driving of the electric supercharger 51 is started at the time t51, the intake throttle valve 32 is fully closed. Furthermore, in the emergency mode, unlike the glow energization mode, also after driving of the electric supercharger 51 is started at the time t51, the bypass valve 65 is kept fully opened.

The intake throttle valve 32 is kept fully closed during a period from the time t51 when driving of the electric supercharger 51 is started until the time t52 when driving of the assist motor 20 is started. When driving of the assist motor 20 is started (at the time t52), the intake throttle valve 32 is opened. Further, the bypass valve 65 is also kept fully opened during a period from the time t51 when driving of the electric supercharger 51 is started until the time t52 when driving of the assist motor 20 is started.

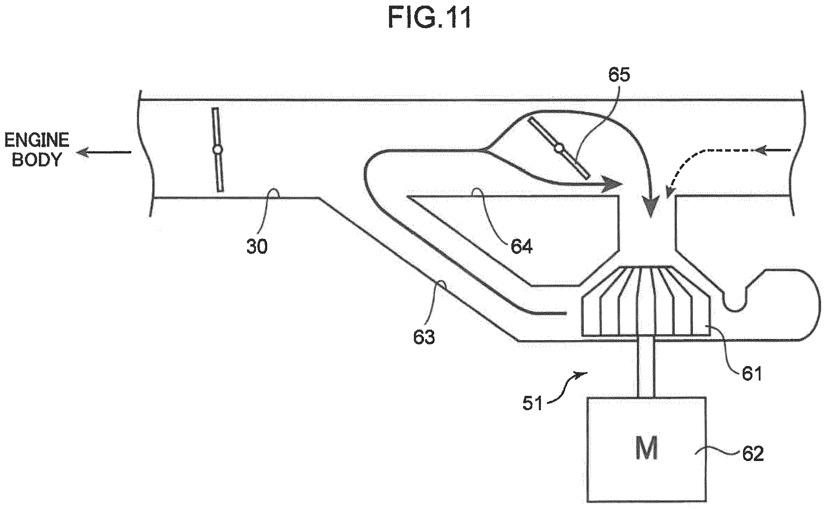

By the above-described control, in the emergency mode, as illustrated in FIG. 11, during a period from the time t51 substantially simultaneously when an ignition-on operation is performed until the time t52 when driving of the assist motor 20 is started, all the intake air (air) that has reached the electric supercharger 51 is blocked by the intake throttle valve 32, and a large amount of intake air is repeatedly compressed by the electric supercharger 51 (compressor 61). Thus, intake air having a high temperature on a side immediately upstream of the intake throttle valve 32 is formed before the time t52 when driving of the assist motor 20 is started.

In particular, in the present embodiment, a period from the time t51 when driving of the electric supercharger 51 is started until the time t52 when driving of the assist motor 20 is started in the emergency mode is set longer than an associated period in the circulating mode and the glow energization mode (period from the times t31 and t41 when driving of the electric supercharger 51 is started until the times t32 and t42 when driving of the assist motor 20 is started). Therefore, a temperature of intake air on a side immediately upstream of the intake throttle valve 32 is further increased before driving of the assist motor 20 is started. The intake air whose temperature is increased on a side immediately upstream of the intake throttle valve 32 is introduced to the cylinder 2, when the intake throttle valve 32 is opened accompanied by start of driving of the assist motor 20.

Control of the electric supercharger 51, the bypass valve 65, and the intake throttle valve 32 during a period from the time t52 when driving of the assist motor 20 is started until the time t54 when the engine is completely exploded is similar to the control in the glow energization mode and the circulating mode. In other words, during this period, drive current of the electric supercharger 51 is set to supercharging current higher than idling current. Further, as the intake throttle valve 32 is opened, an opening angle of the intake throttle valve 32 is set to the throttle angle smaller than the opening angle at the flow saturation point so as form an intake air circulating flow. Further, the bypass valve 65 is set to the circulating bypass opening angle, which is slightly larger than an opening angle of the intake throttle valve 32 but smaller than the opening angle at the flow saturation point.

Thus, also in the emergency mode, after driving of the assist motor 20 is started, similarly to the circulating mode, intake air whose temperature is increased by repeated compression by the electric supercharger 51 and passing through the intake throttle valve 32 having a small opening angle and the bypass valve 65 is introduced to the cylinder 2.

In the emergency mode, in addition to the above-described control, the I/C bypass valve 36 is fully opened at the time t51 when an ignition-on operation is performed. The I/C bypass valve 36 is fully opened until the time t54 when the engine is completely exploded, and at the time t54 and thereafter, the I/C bypass valve 36 is fully closed again. When the I/C bypass valve 36 is fully opened, as described above, substantially all the intake air passes through the I/C bypass passage 35. Therefore, in the emergency mode, substantially all the intake air is introduced to the cylinder 2 without being cooled by the intercooler 33. The I/C bypass valve 36 may be kept fully opened at least during a period until driving of the assist motor 20 is started. Further, a timing at which the I/C bypass valve 36 is fully opened may not coincide with a driving start timing of the electric supercharger 51.

By the above-described control, when the engine is started in the extremely cold state, intake air whose temperature is increased by compression in advance by the electric supercharger 51 is introduced to the cylinder 2 immediately after driving of the assist motor 20 is started, without being cooled by the intercooler 33. Therefore, it is possible to securely increase a compression end temperature inside the cylinder 2 at an earlier stage. Further, setting a temperature of the glow plug 16 to a maximum temperature enhances ignitability of an air-fuel mixture. Therefore, it is possible to more securely achieve a complete explosion state of the engine at an earlier stage in the extremely cold state.

The example of FIG. 10 illustrates a case that, after complete explosion of the engine is finished, the bypass valve 65 is fully closed, drive current of the electric supercharger 51 is kept to supercharging current, and an opening angle of the intake throttle valve 32 is changed to an open side. However, after complete explosion of the engine is finished, an opening angle of the bypass valve 65, an opening angle of the intake throttle valve 32, and drive current of the electric supercharger 51 are changed as necessary according to an opening angle of the accelerator pedal and the like. Likewise, after complete explosion of the engine is finished, a fuel injection amount is also changed according to an accelerator opening angle, a vehicle speed, and the like.

The above-described "throttle angle", "circulating bypass opening angle", and "supercharging current" described in each of the start modes may not have a same value in each of the start modes. Different values may be set in each of the start modes, and in each of the engine states.

### (4) Operations and the like

As described above, in the present embodiment, switching a mode as described above according to an engine water temperature (temperature inside the cylinder 2 immediately before the engine is started) enables to achieve satisfactory engine startability, even when an engine water temperature and an outside air temperature are any temperature.

Further, in the present embodiment, when the engine is started in a state that an engine water temperature is equal to or higher than the first determination temperature Tw1 (a state that a temperature inside the cylinder 2 is equal to or higher than the first reference temperature), specifically, when the engine is started in a completely warm state, driving of the electric supercharger 51 is started after driving of the assist motor 20 is started. Further, when the engine is started in a state that an engine water temperature is lower than the first determination temperature Tw1 (a state that a temperature inside the cylinder 2 is lower than the first reference temperature), specifically, when the engine is started in a state from the first cold state to the extremely cold state, driving of the assist motor 20 is started after driving of the electric supercharger 20 is started.

In other words, a driving start timing of the assist motor 20 and a driving start timing of the electric supercharger 51 are set different from each other. Further, a timing at which inrush current is applied from the battery to the assist motor 20, and a timing at which inrush current is applied from the battery to the electric supercharger 51 are configured not to overlap each other. Therefore, it is possible to suppress an amount of electric current to be output from the battery all at once. This enables to prevent a rapid decrease of electric power accumulated in the battery, while appropriately driving the assist motor 20 and the electric supercharger 51. Further, it is also possible to suppress deterioration of the battery accompanied by the rapid decrease of electric power. An electric power source for supplying electric power to the assist motor 20 and the electric supercharger 51 is not limited to a battery. For example, a capacitor may be used as the electric power source.

Further, when the engine is started in a state from the second cold state to the extremely cold state, the electric supercharger 51 is driven earlier than the assist motor 20, and intake air is supercharged by the electric supercharger 51 in advance. Therefore, it is possible to introduce, into the combustion chamber 6, intake air whose temperature is increased by being supercharged immediately after rotation of the engine is started, after the assist motor 20 is driven. Thus, it is possible to achieve satisfactory engine startability, when the engine is started in a state from the second cold state to the extremely cold state.

In particular, in the present embodiment, when the engine is started in a state that an engine water temperature is lower than the third determination temperature Tw3, the circulating mode, the glow energization mode, and the emergency mode are performed, and an intake air circulating flow is formed. Therefore, when the engine is started in these modes, it is possible to further increase a temperature of intake air by repeatedly compressing intake air by the electric supercharger 51. When the engine is started in a state such that the intake air circulating flow is formed, as described above, the electric supercharger 51 is driven prior to the assist motor 20. This enables to introduce, to the combustion chamber 6, an intake air having a high temperature as described above immediately after rotation of the engine is started, and enhance engine startability more reliably.

Further, in the present embodiment, when the engine is started in a state that an engine water temperature is lower than the fourth determination temperature Tw4 (a state that a temperature inside the cylinder 2 is lower than the second reference temperature being lower than the first reference temperature), in other words, when the engine is started in the fourth cold state or the extremely cold state, the glow energization mode or the emergency mode is performed, and the glow plug 16 is energized before the assist motor 20 is driven. Therefore, it is possible to sufficiently increase a temperature of the glow plug 10 before rotation of the engine is started, and increase a temperature inside the cylinder and a temperature of fuel by the glow plug immediately after rotation of the engine is started. Thus, it is possible to more securely achieve satisfactory engine startability, also when an engine water temperature is lower than the fourth determination temperature Tw4.

### (5) Modification Examples

As described above, the embodiment describes a case that driving of the electric supercharger 51 is started prior to the assist motor 20, when the engine is started in a state that an engine water temperature is lower than the first determination temperature Tw1, and in a state from the first cold state to the extremely cold state. Alternatively, the assist motor 20 may be driven after the electric supercharger 51 is driven exclusively when the engine is started in a state that an engine water temperature is lower than the third determination temperature Tw3, and in a state from the third cold state to the extremely cold state (when the circulating mode, the glow energization mode, or the emergency mode is performed).

Further, the embodiment describes a case that the bypass valve 65 for opening and closing the bypass passage 64 that bypasses the electric supercharger 51 (compressor 61) is provided, and an intake air circulating flow is formed by adjusting an opening angle of each of the intake throttle valve 32 and the bypass valve 65. However, it is also possible to form an intake air circulating flow by adjusting only an opening angle of the intake throttle valve 32. Therefore, the bypass valve 65 may be omitted. However, providing the bypass valve 65 as described above, and setting an opening angle of the bypass valve 65 to an opening angle smaller than a fully opened angle in the circulating mode, the glow energization mode, and the emergency mode enables to increase a temperature of intake air by a resistance generated when the intake air passes through the bypass valve 65, and further increase a temperature of intake air.

Furthermore, the embodiment describes a case that a start mode is switched from the glow energization mode to the emergency mode, when an engine state is changed from a state that an engine water temperature is not lower than the fifth determination temperature Tw5 but lower than the fourth determination temperature Tw4 to a state that an engine water temperature is lower than the fifth determination temperature Tw5. Alternatively, a mode such that a start mode in which the control of opening the I/C bypass valve 36 is eliminated from the control of the emergency mode (a mode in which an energization amount (energization current) of the glow plug 36 is changed to a maximum energization amount (maximum electric current) with respect to the control of the glow energization mode) may be performed between these two modes.

In addition to the above, the embodiment describes an example in which a control device according to the present invention is applied to a diesel engine in which fuel containing gasoline as a main component is compressively ignited. However, an engine to which the present invention is applicable is not limited to the above. For example, the present invention may be applied to a lean burn gasoline engine in which fuel containing gasoline as a main component is combusted at a lean air-fuel ratio.

An engine start control device according to one aspect of the present invention is a device for controlling an engine provided with a cylinder that performs combustion, a piston that reciprocates within the cylinder, and an intake passage through which intake air to be introduced to the cylinder flows. The device includes: an electric supercharger disposed in the intake passage and driven by electric energy; a motor capable of forcibly rotating the engine when the engine is started; and a control unit that controls the electric supercharger and the motor. The control unit drives the electric supercharger after driving the motor, when the engine is started in a state that a temperature inside the cylinder is equal to or higher than a first reference temperature. The control unit drives the motor after driving the electric supercharger, when the engine is started in a state that a temperature inside the cylinder is lower than the first reference temperature.

In this configuration, since the electric supercharger is provided, it is possible to supercharge intake air faster, and enhance acceleration performance.

Further, in this configuration, a driving start timing of the motor capable of forcibly rotating the engine when the engine is rotated, and a driving start timing of the electric supercharger are set different from each other. In other words, inrush current of the motor and inrush current of the electric supercharger are requested at different timings. Therefore, it is possible to suppress an amount of electric current to be output from an electric power source such as a battery or a capacitor, and it is possible to suppress an amount of electric power reduction of an electric power source such as a battery or a capacitor, while appropriately starting to drive the motor and the electric supercharger.

Furthermore, in this configuration, the electric supercharger is driven prior to the motor in a state that a temperature inside the cylinder is particularly low, specifically, lower than the first reference temperature. Therefore, it is possible to introduce, into the cylinder, high-temperature/high-pressure intake air supercharged in advance by the electric supercharger, when the motor is driven and rotation of the engine is started. Thus, it is possible to achieve satisfactory engine startability by enhancing ignitability of an air-fuel mixture inside the cylinder.

In the above configuration, preferably, the engine start control device may further include: a bypass passage connected to the intake passage, and configured to bypass the electric supercharger; and an intake throttle valve disposed on a downstream side with respect to a portion of the intake passage to be connected to a downstream end of the bypass passage, and configured to open and close the intake passage. When the engine is started in a state that a temperature inside the cylinder is lower than the first reference temperature, before driving the motor, the control unit drives the electric supercharger, while reducing an opening angle of the intake throttle valve to an opening angle at which an intake air circulating flow of returning intake air supercharged by the electric supercharger to the electric supercharger through the bypass passage is formed.

In this configuration, it is possible to repeatedly compress intake air by the electric supercharger by forming an intake air circulating flow in a state that a temperature inside the cylinder is lower than the first reference temperature, and it is possible to securely achieve satisfactory engine startability by further increasing a temperature/pressure of intake air faster.

In the above configuration, preferably, the engine start control device may further include a glow plug including a distal end that faces inside the cylinder and generates heat by energization. The control unit energizes the glow plug before driving the motor, when the engine is started in a state that a temperature inside the cylinder is lower than a second reference temperature being lower than the first reference temperature.

In this configuration, increasing a temperature inside the cylinder and a temperature of fuel by the glow plug enables to achieve satisfactory engine startability, even when a temperature inside the cylinder is lower than the second reference temperature. Further, energizing the glow plug before driving the motor enables to sufficiently increase a temperature of the glow plug before rotation of the engine is started. This enables to achieve satisfactory engine startability more reliably.

## Claims

1. An engine start control device for controlling an engine provided with a cylinder that performs combustion, a piston that reciprocates within the cylinder, and an intake passage through which intake air to be introduced to the cylinder flows, comprising:
an electric supercharger disposed in the intake passage and driven by electric energy;
a motor capable of forcibly rotating the engine when the engine is started; and
a control unit that controls the electric supercharger and the motor, wherein
the control unit drives the electric supercharger after driving the motor, when the engine is started in a state that a temperature inside the cylinder is equal to or higher than a first reference temperature, and
the control unit drives the motor after driving the electric supercharger, when the engine is started in a state that a temperature inside the cylinder is lower than the first reference temperature.

2. The engine start control device according to claim 1, further comprising:
a bypass passage connected to the intake passage, and configured to bypass the electric supercharger; and
an intake throttle valve disposed on a downstream side with respect to a portion of the intake passage to be connected to a downstream end of the bypass passage, and configured to open and close the intake passage, wherein
when the engine is started in a state that a temperature inside the cylinder is lower than the first reference temperature, before driving the motor, the control unit drives the electric supercharger, while reducing an opening angle of the intake throttle valve to an opening angle at which an intake air circulating flow of returning intake air supercharged by the electric supercharger to the electric supercharger through the bypass passage is formed.

3. The engine start control device according to claim 2, further comprising
a glow plug including a distal end that faces inside the cylinder and generates heat by energization, wherein
the control unit energizes the glow plug before driving the motor, when the engine is started in a state that a temperature inside the cylinder is lower than a second reference temperature being lower than the first reference temperature.
